# EUROPÄISCHE PATENTSCHRIFT

(11) **EP 3 419 852 B1**
(45) Veröffentlichungstag und Bekanntmachung des Hinweises auf die Patenterteilung: **22.07.2020**
(21) Anmeldenummer: 17706228.8
(22) Anmeldetag: 20.02.2017
(51) Int. Cl.: B60K 17/346, B60K 17/16, B60K 17/02, B60K 23/04

(54) **GETRIEBEEINRICHTUNG FÜR EIN KRAFTFAHRZEUG**
GEARBOX UNIT FOR A MOTOR VEHICLE
DISPOSITIF DE TRANSMISSION POUR VÉHICULE À MOTEUR

(30) Priorität: 24.02.2016 DE 102016202870
(43) Veröffentlichungstag der Anmeldung: 02.01.2019
(73) Patentinhaber: Audi AG, 85045 Ingolstadt (DE)
(72) Erfinder: MEIXNER, Christian, 85049 Ingolstadt (DE); TRAUTMANN, Carsten, 85049 Ingolstadt (DE); WIRTH, Christian, 85452 Moosinning / Eichenried (DE); TSCHULLIK, Jürgen, 92334 Berching (DE)
(86) Internationale Anmeldenummer: PCT/EP2017/053738
(87) Internationale Veröffentlichungsnummer: WO 2017/144392

(56) Entgegenhaltungen:
- EP-A2- 2 368 742
- WO-A1-91/06787
- DE-A1-102014 013 574
- DE-A1-102014 204 573

## Beschreibung

Die Erfindung betrifft eine Getriebeeinrichtung für ein Kraftfahrzeug, wobei das Kraftfahrzeug eine erste Radachse und eine zweite Radachse aufweist, wobei die zweite Radachse aus zumindest einer ersten Teilachse und einer zweiten Teilachse besteht.

Eine derartige Getriebeeinrichtung dient beispielsweise dem Übertragen eines Drehmoments zwischen einem Antriebsaggregat des Kraftfahrzeugs und den wenigstens zwei Radachsen des Kraftfahrzeugs. Somit sind sowohl die erste Radachse als auch die zweite Radachse über die Getriebeeinrichtung an das Antriebsaggregat angebunden. Sie sind mithin zumindest zeitweise angetriebene Radachsen, sodass das Kraftfahrzeug als allradangetriebenes Kraftfahrzeug vorliegen kann. Die erste Radachse ist beispielsweise eine Vorderachse des Kraftfahrzeugs, während die zweite Radachse die Hinterachse des Kraftfahrzeugs darstellt. Es kann jedoch auch eine umgekehrte Konfiguration vorliegen.

Die DE 10 2014 013574 A1 offenbart eine Getriebeeinrichtung der genannten Art.

Bei Getriebeeinrichtungen der genannten Art kann beispielsweise eine Verbindungswelle vorgesehen sein, um das Drehmoment zu der zweiten Radachse zu übertragen, wobei die Verbindungswelle insbesondere als Kardanwelle ausgebildet ist. Um gute Fahreigenschaften zu erzielen, muss der zweiten Radachse üblicherweise ein Differential zugeordnet sein, welches an die Verbindungswelle angeschlossen ist und für eine Aufteilung des über die Getriebeeinrichtung bereitgestellten Drehmoments an die erste Teilachse und die zweite Teilachse Sorge trägt. Das Differential ist in der Wirkverbindung zwischen der Verbindungswelle und der zweiten Radachse vorgesehen. Das Differential ist jedoch platzaufwendig.

Es ist Aufgabe der Erfindung, eine Getriebeeinrichtung vorzustellen, welche gegenüber bekannten Getriebeeinrichtung Vorteile aufweist, insbesondere eine kompakte Ausgestaltung der zweiten Radachse ermöglicht, wobei vorzugsweise kein Differential, insbesondere kein Achsdifferential, zwischen der Verbindungswelle und der zweiten Radachse vorliegt.

Dies wird erfindungsgemäß mit einer Getriebeeinrichtung mit den Merkmalen des Anspruchs 1 erreicht. Dabei sind eine mit der ersten Teilachse wirkverbindbare erste Verbindungswelle, eine mit der zweiten Teilachse wirkverbindbare zweite Verbindungswelle sowie ein Koppelgetriebe mit einer mit einem Antriebsaggregat des Kraftfahrzeugs wirkverbindbaren Antriebswelle und mit einer mit der ersten Radachse wirkverbindbaren Abtriebswelle vorgesehen, wobei über das Koppelgetriebe die Antriebswelle mit der ersten Verbindungswelle und der zweiten Verbindungswelle drehmomentaufteilend wirkverbunden ist, und wobei die Abtriebswelle mittels einer ersten Kupplung und mittels einer zweiten Kupplung jeweils separat schaltbar mit der Antriebswelle wirkverbindbar ist, wobei in der Wirkverbindung zwischen der ersten Kupplung und der Antriebswelle ein erstes Überlagerungsgetriebe und in der Wirkverbindung zwischen der zweiten Kupplung und der Antriebswelle ein zweites Überlagerungsgetriebe vorgesehen ist und wobei eine über die Überlagerungsgetriebe zwischen der Abtriebswelle und der Antriebswelle hergestellte Wirkverbindung nicht über das Koppelgetriebe vorliegt.

Eine Drehmomentübertragung von der Getriebeeinrichtung in Richtung der zweiten Radachse wird also nicht wie üblich mittels lediglich einer Verbindungswelle beziehungsweise Kardanwelle, sondern vielmehr mit wenigstens zwei Verbindungswellen, nämlich insbesondere der ersten Verbindungswelle und der zweiten Verbindungswelle, vorgenommen. Die erste Verbindungswelle ist dabei mit der ersten Teilachse der zweiten Radachse koppelbar beziehungsweise gekoppelt. Die zweite Verbindungswelle ist dagegen mit der zweiten Teilachse der zweiten Radachse koppelbar beziehungsweise gekoppelt. Weil die Drehmomentübertragung zu den beiden Teilachsen getrennt voneinander über die beiden Verbindungswellen erfolgt, kann ein ansonsten aufwendiges Achsdifferential, welches der zweiten Radachse zugeordnet wäre, in das Koppelgetriebe integriert werden. Beispielsweise weist das Koppelgetriebe lediglich das Achsdifferential auf. Das Koppelgetriebe kann jedoch auch als Doppeldifferential vorliegen, welches sowohl ein Mittendifferential als auch das Achsdifferential in einer Baueinheit integriert. Entsprechend ist eine platzsparende Anordnung der zweiten Radachse möglich.

Die Erfindung betrifft selbstverständlich auch ein Kraftfahrzeug mit einer Getriebeeinrichtung, welche bevorzugt auf die vorstehend genannte Art ausgebildet ist. Das Kraftfahrzeug weist die erste Radachse und die zweite Radachse auf, wobei die zweite Radachse aus zumindest der ersten Teilachse und der zweiten Teilachse besteht. Das Kraftfahrzeug zeichnet sich durch eine mit der ersten Teilachse wirkverbundene erste Verbindungswelle, durch eine mit der zweiten Teilachse wirkverbundene zweite Verbindungswelle sowie durch ein Koppelgetriebe mit einer mit einem Antriebsaggregat des Kraftfahrzeugs wirkverbundenen Antriebswelle und mit einer mit der ersten Radachse wirkverbundenen Abtriebswelle aus, wobei über das Koppelgetriebe die Antriebswelle mit der ersten Verbindungswelle und der zweiten Verbindungswelle drehmomentaufteilend wirkverbunden ist, und wobei die Abtriebswelle mittels einer ersten Kupplung und mittels einer zweiten Kupplung jeweils separat schaltbar mit der Antriebswelle wirkverbindbar ist, wobei in der Wirkverbindung zwischen der ersten Kupplung und der Antriebswelle ein erstes Überlagerungsgetriebe und in der Wirkverbindung zwischen der zweiten Kupplung und der Antriebswelle ein zweites Überlagerungsgetriebe vorgesehen ist. Das Kraftfahrzeug beziehungsweise die Getriebeeinrichtung des Kraftfahrzeugs kann gemäß der vorliegenden Beschreibung weitergebildet sein.

Die Wirkverbindung über das Koppelgetriebe ist drehmomentaufteilend. Das bedeutet, dass ein Teil des über die Antriebswelle bereitgestellten Drehmoments an der ersten Verbindungswelle und ein weiterer Teil an der zweiten Verbindungswelle bereitgestellt wird. Dabei kann eine gleiche, aber auch eine ungleiche Drehmomentverteilung zwischen der ersten Verbindungswelle und der zweiten Verbindungswelle erzielt werden. Sowohl die erste Verbindungswelle als auch die zweite Verbindungswelle können - optional - als Kardanwelle ausgebildet sein.

Zusätzlich zu dem Koppelgetriebe sind das erste Überlagerungsgetriebe und das zweite Überlagerungsgetriebe vorgesehen. Über die beiden Überlagerungsgetriebe ist eine Wirkverbindung zwischen der Abtriebswelle und der Antriebswelle herstellbar. Zu diesem Zweck sind die erste Kupplung und die zweite Kupplung vorgesehen. Während also die Antriebswelle über das Koppelgetriebe mit der ersten Verbindungswelle und der zweiten Verbindungswelle wirkverbunden ist, vorzugsweise starr und/oder permanent, ist die Abtriebswelle mittels der ersten Kupplung und der zweiten Kupplung an die Antriebswelle koppelbar. In der Koppelverbindung beziehungsweise in der Wirkverbindung zwischen der Abtriebswelle und der Antriebswelle ist dabei im Falle der ersten Kupplung das erste Überlagerungsgetriebe und im Falle der zweiten Kupplung das zweite Überlagerungsgetriebe angeordnet. Das bedeutet also, dass das Drehmoment zwischen der Antriebswelle und der Abtriebswelle einerseits über die erste Kupplung und das erste Überlagerungsgetriebe sowie andererseits über die zweite Kupplung und das zweite Überlagerungsgetriebe jeweils wahlweise übertragen werden kann.

Beispielsweise ist in einem ersten Schaltzustand der ersten Kupplung die Wirkverbindung zwischen der Abtriebswelle und der Antriebswelle über das erste Überlagerungsgetriebe unterbrochen, dies gilt ebenso für die Wirkverbindung über das zweite Überlagerungsgetriebe in einem ersten Schaltzustand der zweiten Kupplung. In einem zweiten Schaltzustand der ersten Kupplung ist die Abtriebswelle über das erste Überlagerungsgetriebe mit der Antriebswelle wirkverbunden; analog dazu ist in einem zweiten Schaltzustand der zweiten Kupplung die Abtriebswelle über das zweite Überlagerungsgetriebe mit der Antriebswelle wirkverbunden. Die Überlagerungsgetriebe weisen dabei eine bestimmte Übersetzung auf, welche beispielsweise fest ist. Bevorzugt ist die Übersetzung des ersten Überlagerungsgetriebes identisch mit derjenigen des zweiten Überlagerungsgetriebes. Die Übersetzungen können jedoch auch voneinander verschieden sein. Selbstverständlich können das erste Überlagerungsgetriebe und/oder das zweite Überlagerungsgetriebe jedoch alternativ jeweils auch eine einstellbare Übersetzung aufweisen und hierzu zum Beispiel als Mehrganggetriebe ausgeführt sein.

Es soll darauf hingewiesen werden, dass die beiden Überlagerungsgetriebe von dem Koppelgetriebe verschieden sind. Die über die Überlagerungsgetriebe zwischen der Abtriebswelle und der Antriebswelle hergestellte Wirkverbindung liegt insoweit nicht oder zumindest nicht vollständig über das Koppelgetriebe vor. Mithilfe der Überlagerungsgetriebe ist es insbesondere bei einer Kurvenfahrt des Kraftfahrzeugs möglich, ein Drehmoment von der ersten Teilachse und/oder der zweiten Teilachse der zweiten Radachse an die erste Radachse zu übertragen. Das bedeutet insbesondere, dass sowohl von einem kurvenäußeren Hinterrad als auch von einem kurveninneren Hinterrad Drehmoment an die Vorderachse übertragen werden kann, wobei dem kurvenäußeren Hinterrad vorzugsweise ein geringeres Drehmoment entzogen wird als dem kurveninneren Hinterrad. Insgesamt ist also mithilfe der Überlagerungsgetriebe in zahlreichen Fahrzuständen des Kraftfahrzeugs, vorzugsweise in jedem Fahrzustand des Kraftfahrzeugs, ein "torque vectoring" möglich, also das gezielte Übertragen von Drehmoment auf eine bestimmte Radachse, insbesondere von einer der Teilachsen oder von beiden Teilachsen der zweiten Radachse. Jedes der Überlagerungsgetriebe kann beispielsweise als Minusplanetengetriebe oder als Plusplanetengetriebe realisiert sein.

Beispielsweise ist es vorgesehen, dass das Koppelgetriebe ein Planetengetriebe aufweist beziehungsweise als ein solches ausgestaltet ist, wobei die Antriebswelle sowie die erste Verbindungswelle und die zweite Verbindungswelle jeweils unmittelbar mit dem Koppelgetriebe wirkverbunden sind. Das Koppelgetriebe stellt nunmehr ein Achsdifferential für die zweite Radachse dar. Dieses wird also von einem Einbauort im Bereich der zweiten Radachse in die Getriebeeinrichtung verlagert und in die Getriebeeinrichtung integriert. Die Antriebswelle sowie die beiden Verbindungswellen sind unmittelbar mit dem Koppelgetriebe wirkverbunden. Unter der unmittelbaren Wirkverbindung ist zu verstehen, dass die genannten Wellen jeweils mit einem Element des Koppelgetriebes gekoppelt sind, sodass die Wirkverbindung nicht über eines der Überlagerungsgetriebe verläuft. Sofern im Rahmen dieser Beschreibung von einer unmittelbaren Wirkverbindung die Rede ist, so ist bevorzugt stets - sofern nichts anderes ausgeführt ist - eine direkte und starre beziehungsweise drehfeste Verbindung gemeint. Unmittelbar miteinander wirkverbundene Elemente sind insoweit drehzahlerhaltend miteinander verbunden, weisen also stets dieselbe Drehzahl oder eine übersetzungsabhängige Drehzahl auf. In letzterem Fall stehen die Elemente insbesondere in einem konstanten Drehzahlverhältnis zueinander.

Eine weitere Ausgestaltung der Erfindung sieht vor, dass das erste Überlagerungsgetriebe und das zweite Überlagerungsgetriebe als Planetengetriebe ausgebildet sind, die jeweils unmittelbar mit dem Koppelgetriebe wirkverbunden sind. Jeweils ein Rad der beiden Überlagerungsgetriebe ist mithin an ein Rad des Koppelgetriebes angeschlossen beziehungsweise mit diesem wirkverbunden, insbesondere unmittelbar wirkverbunden, bevorzugt starr und/oder permanent. Beispielsweise liegt eine Wirkverbindung zwischen dem Koppelgetriebe und der ersten Verbindungswelle einerseits sowie dem Koppelgetriebe und der zweiten Verbindungswelle andererseits zunächst unmittelbar vor. Das bedeutet, dass die entsprechende Verbindungswelle jeweils direkt an das Koppelgetriebe angeschlossen ist, also vorzugsweise starr und/oder permanent mit einem Rad des Koppelgetriebes wirkverbunden ist.

Zusätzlich oder alternativ kann es vorgesehen sein, dass die vorstehend genannten Wirkverbindungen oder zumindest eine der Wirkverbindungen, insbesondere die Wirkverbindung zwischen dem Koppelgetriebe und der ersten Verbindungswelle oder die Wirkverbindung zwischen dem Koppelgetriebe und der zweiten Verbindungswelle, über das entsprechende Überlagerungsgetriebe vorliegen. Das bedeutet also, dass eine Wirkverbindung zwischen dem Koppelgetriebe und der ersten Verbindungswelle über das erste Überlagerungsgetriebe und/oder eine Wirkverbindung zwischen dem Koppelgetriebe und der zweiten Verbindungswelle über das zweite Überlagerungsgetriebe vorliegt.

Eine bevorzugte Ausführungsform der Erfindung sieht vor, dass die Abtriebswelle über die erste Kupplung mit dem ersten Überlagerungsgetriebe und über die zweite Kupplung mit dem zweiten Überlagerungsgetriebe wirkverbindbar ist. Die Kupplungen sind insoweit auf der der Abtriebswelle zugeordneten Seite des Überlagerungsgetriebes vorgesehen. Bei vollständig geöffneter erster Kupplung beziehungsweise bei vollständig geöffneter zweiter Kupplung ist also das erste Überlagerungsgetriebe beziehungsweise das zweite Überlagerungsgetriebe vollständig von der Abtriebswelle entkoppelt. Gleichzeitig kann es jedoch vorgesehen sein, dass das erste Überlagerungsgetriebe vorzugsweise starr und/oder permanent mit der ersten Verbindungswelle und/oder das zweite Überlagerungsgetriebe vorzugsweise starr und/oder permanent mit der zweiten Verbindungswelle unmittelbar wirkverbunden ist.

Eine weitere Ausgestaltung der Erfindung sieht vor, dass das Koppelgetriebe ein Koppelgetriebesonnenrad, ein Koppelgetriebehohlrad und einen Koppelgetriebeplanetenträger mit wenigstens einem mit dem Koppelgetriebesonnenrad und dem Koppelgetriebehohlrad kämmenden Koppelgetriebeplanetenrad aufweist, wobei das Koppelgetriebehohlrad mit der Antriebswelle unmittelbar wirkverbunden ist. Das Koppelgetriebe liegt insoweit als Planetengetriebe vor und weist die entsprechenden Elemente beziehungsweise Räder auf. Vorzugsweise ist die Antriebswelle starr und/oder permanent mit dem Koppelgetriebehohlrad verbunden beziehungsweise unmittelbar wirkverbunden. Selbstverständlich kann jedoch auch eine andere Ausgestaltung vorgesehen sein.

In einer weiteren bevorzugten Ausgestaltung der Erfindung ist vorgesehen, dass der Koppelgetriebeplanetenträger mit der zweiten Verbindungswelle und das Koppelgetriebesonnenrad mit der ersten Verbindungswelle unmittelbar wirkverbunden ist. Die unmittelbare Wirkverbindung ist vorzugsweise starr und/oder permanent. Unter der unmittelbaren Wirkverbindung ist wiederum eine Wirkverbindung zu verstehen, welche vorzugsweise nicht über eines oder mehrere der Getriebe, also beispielsweise das Koppelgetriebe, das erste Überlagerungsgetriebe und/oder das zweite Überlagerungsgetriebe, verläuft, sondern über eine unmittelbare Kopplung.

Eine Weiterbildung der Erfindung sieht vor, dass der Koppelgetriebeplanetenträger zumindest das als Außenplanetenrad ausgebildete Koppelgetriebeplanetenrad und zumindest ein Innenplanetenrad aufweist, die miteinander kämmen, wobei das Außenplanetenrad mit dem Koppelgetriebehohlrad und das Innenplanetenrad mit dem Koppelgetriebesonnenrad kämmt. Das Koppelgetriebe ist insoweit als Doppelplanetengetriebe ausgebildet. Entsprechend ist sowohl das Außenplanetenrad als auch das Innenplanetenrad vorgesehen, über welche das Koppelgetriebehohlrad und das Koppelgetriebesonnenrad miteinander in Wirkverbindung stehen.

Sowohl das Außenplanetenrad als auch das Innenplanetenrad sind an dem Koppelgetriebeplanetenträger drehbar angeordnet beziehungsweise gelagert. Sie kämmen miteinander, während gleichzeitig das Außenplanetenrad in das Koppelgetriebehohlrad und das Innenplanetenrad in das Koppelgetriebesonnenrad eingreift. Das Außenplanetenrad und das Innenplanetenrad können an bezüglich der Drehachse des Koppelgetriebeplanetenträgers unterschiedlichen Radialpositionen angeordnet sein.

In einer weiteren Ausgestaltung der Erfindung ist vorgesehen, dass das erste Überlagerungsgetriebe ein erstes Überlagerungsgetriebesonnenrad, ein erstes Überlagerungsgetriebehohlrad und einen ersten Überlagerungsgetriebeplanetenträger mit wenigstens einem mit dem ersten Überlagerungsgetriebesonnenrad und dem ersten Überlagerungsgetriebehohlrad kämmenden ersten Überlagerungsgetriebeplanetenrad aufweist, wobei das erste Überlagerungsgetriebehohlrad über die erste Kupplung unmittelbar mit der Abtriebswelle wirkverbindbar ist. Das zweite Überlagerungsgetriebe ist also als übliches Planetengetriebe ausgestaltet, dessen Planetenträger durch zumindest teilweises oder vollständiges Schließen der zweiten Kupplung unmittelbar mit der Abtriebswelle wirkverbunden werden kann.

In einer weiteren Ausgestaltung der Erfindung ist vorgesehen, dass das zweite Überlagerungsgetriebe ein zweites Überlagerungsgetriebesonnenrad, ein zweites Überlagerungsgetriebehohlrad und einen zweiten Überlagerungsgetriebeplanetenträger mit wenigstens einem mit dem zweiten Überlagerungsgetriebesonnenrad und dem zweiten Überlagerungsgetriebehohlrad kämmenden zweiten Überlagerungsgetriebeplanetenrad aufweist, wobei der zweite Überlagerungsgetriebeplanetenträger über die zweite Kupplung unmittelbar mit der Abtriebswelle wirkverbindbar ist. Das zweite Überlagerungsgetriebe ist folglich analog zu dem ersten Überlagerungsgetriebe ausgestaltet. Auch hier kann durch zumindest teilweises Schließen der zweiten Kupplung der Planetenträger unmittelbar mit der Abtriebswelle wirkverbunden werden.

Im Rahmen einer weiteren Ausgestaltung der Erfindung ist vorgesehen, dass das zweite Überlagerungsgetriebesonnenrad, insbesondere über den ersten Überlagerungsgetriebeplanetenträger, und/oder der erste Überlagerungsgetriebeplanetenträger mit der Antriebswelle und dem Koppelgetriebehohlrad unmittelbar wirkverbunden sind/ist. Anders ausgedrückt sind das zweite Überlagerungsgetriebesonnenrad, der erste Überlagerungsgetriebeplanetenträger oder beide drehfest mit dem Koppelgetriebehohlrad sowie der Antriebswelle verbunden. Im Falle des zweiten Überlagerungsgetriebesonnenrads kann dieses gleichzeitig drehfest mit dem ersten Überlagerungsgetriebeplanetenträger verbunden sein und erst über diesen mit der Antriebswelle beziehungsweise dem Koppelgetriebehohlrad drehfest verbunden sein.

Schließlich kann es im Rahmen einer weiteren Ausgestaltung der Erfindung vorgesehen sein, dass das erste Überlagerungsgetriebesonnenrad und das zweite Überlagerungsgetriebehohlrad unmittelbar mit der ersten Verbindungswelle oder der zweiten Verbindungswelle wirkverbunden sind. Das erste Überlagerungsgetriebesonnenrad und das zweite Überlagerungsgetriebehohlrad sind drehfest miteinander verbunden. Zudem stehen sie mit der ersten Verbindungswelle oder der zweiten Verbindungswelle in unmittelbarer Wirkverbindung. Ersteres kann insbesondere vorgesehen sein, wenn die Abtriebswelle koaxial in der Antriebswelle aufgenommen wird. Die unmittelbare Wirkverbindung zu der zweiten Verbindungswelle kann dagegen bei der umgekehrten Anordnung von Antriebswelle und Abtriebswelle vorgesehen sein, also bei einer koaxialen Anordnung der Antriebswelle in der Abtriebswelle.

Zusätzlich oder alternativ kann vorgesehen sein, dass die erste Verbindungswelle über eine erste Getriebeeinheit mit der ersten Teilachse und die zweite Verbindungswelle über eine, insbesondere identisch mit der ersten Getriebeeinheit ausgebildete zweite Getriebeeinheit, mit der zweiten Teilachse verbindbar beziehungsweise verbunden ist. Zwischen den Verbindungswellen und der jeweiligen Teilachse sind also die Getriebeeinheiten vorgesehen. Diese Getriebeeinheiten können beispielsweise eine Zahnradstufe, insbesondere eine Kegelradstufe, aufweisen. Dabei können für die erste Teilachse und die zweite Teilachse unterschiedliche Getriebeeinheiten vorgesehen sein. Besonders vorteilhaft ist es jedoch, wenn die zweite Getriebeeinheit der zweiten Teilachse identisch mit der ersten Getriebeeinheit der ersten Teilachse ausgestaltet ist, um insoweit eine geringere Anzahl unterschiedlicher Teile vorhalten zu müssen.

Es kann weiterhin zusätzlich oder alternativ vorgesehen sein, dass die erste und die zweite Verbindungswelle koaxial oder parallel versetzt zueinander angeordnet sind. Ersteres ist insbesondere dann der Fall, wenn die erste Verbindungswelle mit dem Koppelgetriebesonnenrad und die zweite Verbindungswelle mit dem Koppelgetriebeplanetenträger jeweils unmittelbar wirkverbunden beziehungsweise drehfest gekoppelt ist, also beispielsweise ohne eine zwischengelagerte Zahnradstufe. Die koaxiale Anordnung der beiden Verbindungswellen ermöglicht eine äußerst platzsparende Ausgestaltung der Getriebeeinrichtung. Die parallel zueinander versetzte Anordnung ist insbesondere vorgesehen, wenn zum Beispiel die Wirkverbindung der ersten Verbindungswelle über eine Zahnradstufe oder eine drehrichtungserhaltene Kopplung verläuft.

Es kann außerdem vorgesehen sein, dass die Abtriebswelle koaxial in der Antriebswelle aufgenommen ist oder umgekehrt. Auch dies dient der Verringerung der Baugröße der Getriebeeinrichtung.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine Getriebeeinrichtung für ein Kraftfahrzeug in einer ersten Ausführungsform, und
- Figur 2: die Getriebeeinrichtung in einer zweiten Ausführungsform.

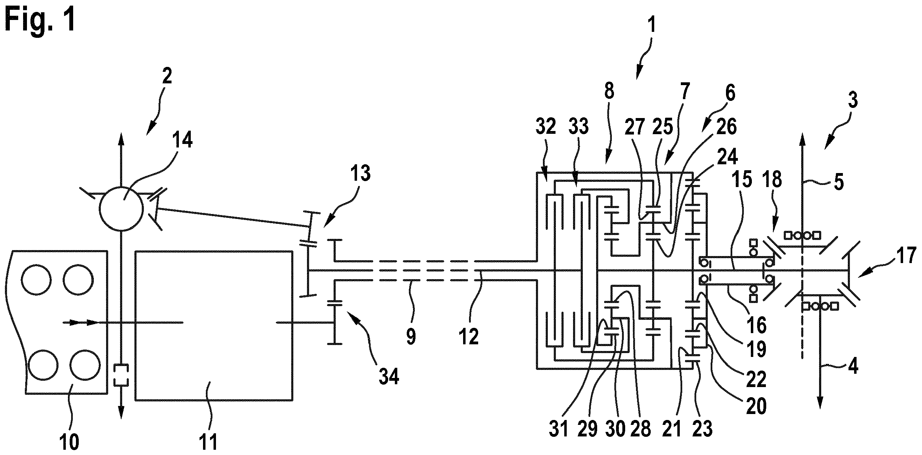

Die Figur 1 zeigt eine erste Ausführungsform einer Getriebeeinrichtung 1 für ein Kraftfahrzeug, welches hier lediglich schematisch angedeutet ist. Das Kraftfahrzeug weist eine erste Radachse 2 und eine zweite Radachse 3 auf, die hier wiederum lediglich angedeutet sind, wobei die zweite Radachse 3 aus zumindest einer ersten Teilachse 4 und einer zweiten Teilachse 5 besteht. Die Getriebeeinrichtung 1, die erste Radachse 2 und die zweite Radachse 3 bilden zumindest einen Teil eines Antriebsstrangs des Kraftfahrzeugs. Die Getriebeeinrichtung 1 verfügt über ein Koppelgetriebe 6, ein erstes Überlagerungsgetriebe 7 und ein zweites Überlagerungsgetriebe 8. Die Getriebeeinrichtung 1 weist eine Antriebswelle 9 auf, die mit einem Antriebsaggregat 10 des Kraftfahrzeugs wirkverbindbar ist, beispielsweise über ein Mehrganggetriebe 11.

Weiterhin verfügt die Getriebeeinrichtung 1 über eine Abtriebswelle 12, an welche die erste Radachse 2 angeschlossen ist, beispielsweise über wenigstens eine Zahnradstufe 13 und/oder ein Achsdifferential 14. Eine Wirkverbindung von dem Koppelgetriebe 6 zu der zweiten Radachse 3 beziehungsweise der dieser zugeordneten ersten Teilachse 4 und der zweiten Teilachse 5 liegt über eine erste Verbindungswelle 15 und eine zweite Verbindungswelle 16 vor. Die erste Verbindungswelle 15 ist über eine erste Getriebeeinheit 17, die beispielsweise als Zahnradstufe vorliegt, mit der ersten Teilachse 4 und die zweite Verbindungswelle 16 über eine zweite Getriebeeinheit 18, die beispielsweise ebenfalls als Zahnradstufe vorliegt, mit der zweiten Teilachse 5 wirkverbunden.

Das Koppelgetriebe 6 ist als Planetengetriebe ausgebildet und weist ein Koppelgetriebesonnenrad 19 und einen Koppelgetriebeplanetenträger 20 auf. An dem Koppelgetriebeplanetenträger 20 sind wenigstens ein Außenplanetenrad 21 und ein Innenplanetenrad 22 drehbar gelagert. Das Innenplanetenrad 22 kämmt nun mit dem Koppelgetriebesonnenrad 19 sowie dem Außenplanetenrad 21. Das Außenplanetenrad 21 dagegen kämmt mit dem Innenplanetenrad 22 sowie einem Koppelgetriebehohlrad 23, welches ebenfalls dem Koppelgetriebe 6 zugeordnet ist.

In dem hier dargestellten Ausführungsbeispiel ist die Antriebswelle 9 starr und/oder permanent mit dem Koppelgetriebehohlrad 23 wirkverbunden beziehungsweise drehfest verbunden. Der Koppelgetriebeplanetenträger 20 ist dagegen vorzugsweise starr und/oder permanent mit der zweiten Verbindungswelle 16 wirkverbunden beziehungsweise drehfest verbunden. Die erste Verbindungswelle 15 ist vorzugsweise starr und/oder permanent mit dem Koppelgetriebesonnenrad 19 wirkverbunden beziehungsweise drehfest verbunden.

Das erste Überlagerungsgetriebe 7 weist ein erstes Überlagerungsgetriebesonnenrad 24, ein erstes Überlagerungsgetriebehohlrad 25 und einen ersten überlagerungsgetriebeplanetenträger 26 mit wenigstens einem mit dem ersten Überlagerungsgetriebesonnenrad 24 und dem ersten Überlagerungsgetriebehohlrad 25 kämmenden ersten Überlagerungsgetriebeplanetenrad 27 auf, welches an dem ersten Überlagerungsgetriebeplanetenträger 26 drehbar gelagert ist. Das zweite Überlagerungsgetriebe 8 besteht analog hierzu aus einem zweiten Überlagerungsgetriebesonnenrad 28, einem zweiten Überlagerungsgetriebehohlrad 29 und einem zweiten Überlagerungsgetriebeplanetenträger 30 mit wenigstens einem mit dem zweiten Überlagerungsgetriebesonnenrad 28 und dem zweiten Überlagerungsgetriebehohlrad 29 kämmenden zweiten Überlagerungsgetriebeplanetenrad 31, welches an dem zweiten Überlagerungsgetriebeplanetenträger 30 drehbar gelagert ist.

Das erste Überlagerungsgetriebesonnenrad 24 ist mit dem zweiten Überlagerungsgetriebehohlrad 29 unmittelbar wirkverbunden beziehungsweise drehfest gekoppelt. Gleichzeitig sind das erste Überlagerungsgetriebesonnenrad 24 und das zweite Überlagerungsgetriebehohlrad 29 unmittelbar mit der ersten Verbindungswelle 15 und entsprechend mit dem Koppelgetriebesonnenrad 19 unmittelbar wirkverbunden beziehungsweise drehfest verbunden. Zusätzlich oder alternativ kann es vorgesehen sein, dass der erste Überlagerungsgetriebeplanetenträger 26 mit dem zweiten Überlagerungsgetriebesonnenrad 28 unmittelbar wirkverbunden beziehungsweise drehfest verbunden ist.

Zudem sind der erste Überlagerungsgetriebeplanetenträger 26 und das zweite Überlagerungsgetriebesonnenrad 28 unmittelbar mit dem Koppelgetriebehohlrad 23 und entsprechend mit der Antriebswelle 9 unmittelbar wirkverbunden beziehungsweise drehfest verbunden. Das zweite Überlagerungsgetriebesonnenrad 28 kann dabei über den ersten Überlagerungsgetriebeplanetenträger 26 mit der Antriebswelle 9 beziehungsweise dem Koppelgetriebehohlrad 23 verbunden sein. Insoweit ist das erste Überlagerungsgetriebe 7 in axialer Richtung bezüglich einer Drehachse beispielsweise der Antriebswelle 9 zwischen dem Koppelgetriebe 6 und dem zweiten Überlagerungsgetriebe 8 angeordnet.

Die Getriebeeinrichtung 1 verfügt weiterhin über eine erste Kupplung 32 und eine zweite Kupplung 33. Mithilfe der ersten Kupplung 32 ist die Abtriebswelle 12 mit der Antriebswelle 9 über das erste Überlagerungsgetriebe 7 wirkverbindbar beziehungsweise koppelbar. Bei geschlossener Kupplung 32 ist das erste Überlagerungsgetriebehohlrad 25 bezüglich der Abtriebswelle 12 festgesetzt. Analog dazu dient die zweite Kupplung 33 dem Herstellen einer Wirkverbindung zwischen der Abtriebswelle 12 und der Antriebswelle 9 über das zweite Überlagerungsgetriebe 8. Hier ist bei geschlossener Kupplung 33 der zweite Überlagerungsgetriebeplanetenträger 30 bezüglich der Abtriebswelle 12 festgesetzt. Durch gezieltes, wenigstens teilweises Öffnen beziehungsweise Schließen der Kupplungen 32 und 33 kann ein "torque vectoring" zwischen der ersten Radachse 2 und der zweiten Radachse 3 erzielt werden. Insbesondere kann Drehmoment von einer der Teilachsen 4 und 5 oder auch von beiden Teilachsen 4 und 5 auf die erste Radachse 2 übertragen werden.

Weiterhin ist erkennbar, dass die Antriebswelle 9 über eine Zahnradstufe 34 mit dem Antriebsaggregat 10 wirkverbunden ist, insbesondere über das Mehrganggetriebe 11. Zudem ist die Abtriebswelle 12 koaxial in der Antriebswelle 9 angeordnet.

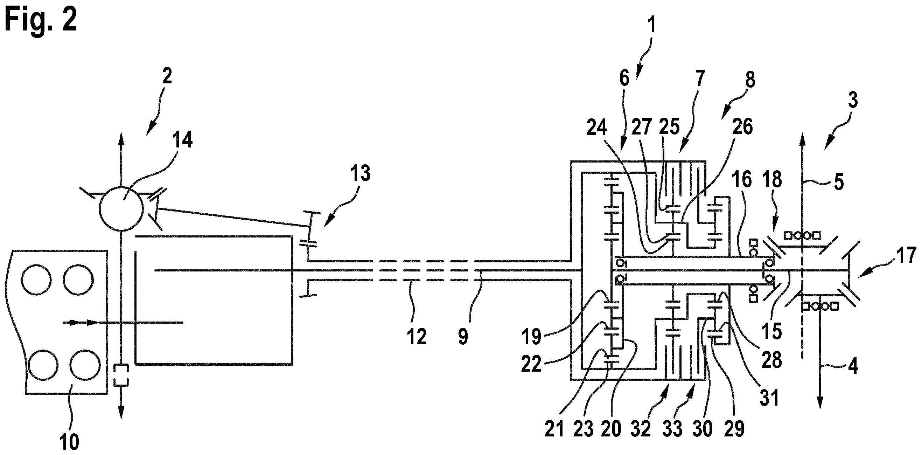

Die Figur 2 zeigt eine zweite Ausführungsform der Getriebeeinrichtung 1. Grundsätzlich wird auf die vorstehenden Ausführungen verwiesen, sodass nachfolgend lediglich auf die Unterschiede eingegangen wird. Während im Rahmen der ersten Ausführungsform die Abtriebswelle 12 koaxial in der Antriebswelle 9 angeordnet ist, ist dies für die zweite Ausführungsform umgekehrt. Entsprechend ist die Antriebswelle 9 koaxial in der Abtriebswelle 12 angeordnet. Die Zahnradstufe 34 kann daher entfallen. Die erste Verbindungswelle 15 ist zwar weiterhin mit dem Koppelgetriebesonnenrad 19 unmittelbar wirkverbunden beziehungsweise drehfest verbunden, es entfallen jedoch die Verbindungen zwischen der ersten Verbindungswelle 15 und dem ersten Überlagerungsgetriebesonnenrad 24 und dem zweiten Überlagerungsgetriebehohlrad 29. Diese Verbindungen sind stattdessen für die zweite Verbindungswelle 16 vorgesehen. Die zweite Verbindungswelle 16 ist somit zum einen mit dem Koppelgetriebeplanetenträger 20 unmittelbar wirkverbunden. Andererseits ist sie mit dem ersten Überlagerungsgetriebesonnenrad 24 und dem zweiten Überlagerungsgetriebehohlrad 29 drehfest verbunden. Die Getriebeeinrichtung 1 in der zweiten Ausführungsform stellt im Wesentlichen eine inverse Bauform der ersten Ausführungsform dar.

## Patentansprüche

1. Getriebeeinrichtung (1) für ein Kraftfahrzeug, wobei das Kraftfahrzeug eine erste Radachse (2) und eine zweite Radachse (3) aufweist, wobei die zweite Radachse (2) aus zumindest einer ersten Teilachse (4) und einer zweiten Teilachse (5) besteht, wobei eine mit der ersten Teilachse (4) wirkverbindbare erste Verbindungswelle (15), eine mit der zweiten Teilachse (5) wirkverbindbare zweite Verbindungswelle (16) sowie ein Koppelgetriebe (6) mit einer mit einem Antriebsaggregat (10) des Kraftfahrzeugs wirkverbindbaren Antriebswelle (9) und mit einer mit der ersten Radachse (2) wirkverbindbaren Abtriebswelle (12) vorliegen, wobei über das Koppelgetriebe (6) die Antriebswelle (9) mit der ersten Verbindungswelle (15) und der zweiten Verbindungswelle (16) drehmomentaufteilend wirkverbunden ist, und wobei die Abtriebswelle (12) mittels einer ersten Kupplung (32) und mittels einer zweiten Kupplung (33) jeweils separat schaltbar mit der Antriebswelle (9) wirkverbindbar ist, wobei in der Wirkverbindung zwischen der ersten Kupplung (32) und der Antriebswelle (9) ein erstes Überlagerungsgetriebe (7) und in der Wirkverbindung zwischen der zweiten Kupplung (33) und der Antriebswelle (9) ein zweites Überlagerungsgetriebe (8) vorgesehen ist, **dadurch gekennzeichnet, dass** eine über die Überlagerungsgetriebe (7,8) zwischen der Abtriebswelle (12) und der Antriebswelle (9) hergestellte Wirkverbindung nicht über das Koppelgetriebe (6) vorliegt.

2. Getriebeeinrichtung nach Anspruch 1, **dadurch gekennzeichnet, dass** das erste Überlagerungsgetriebe (7) und das zweite Überlagerungsgetriebe (8) als Planetengetriebe ausgebildet sind, die jeweils unmittelbar mit dem Koppelgetriebe (6) wirkverbunden sind.

3. Getriebeeinrichtung nach einem der vorhergehenden Ansprüche, **dadurch gekennzeichnet, dass** die Abtriebswelle (12) über die erste Kupplung (32) mit dem ersten Überlagerungsgetriebe (7) und über die zweite Kupplung (33) mit dem zweiten Überlagerungsgetriebe (8) wirkverbindbar ist.

4. Getriebeeinrichtung nach einem der vorhergehenden Ansprüche, **dadurch gekennzeichnet, dass** das Koppelgetriebe (6) ein Koppelgetriebesonnenrad (19), ein Koppelgetriebehohlrad (23) und einen Koppelgetriebeplanetenträger (20) mit wenigstens einem mit dem Koppelgetriebesonnenrad (19) und dem Koppelgetriebehohlrad (23) kämmenden Koppelgetriebeplanetenrad (21) aufweist, wobei das Koppelgetriebehohlrad (23) mit der Antriebswelle (9) unmittelbar wirkverbunden ist.

5. Getriebeeinrichtung nach einem der vorhergehenden Ansprüche, **dadurch gekennzeichnet, dass** der Koppelgetriebeplanetenträger (20) mit der zweiten Verbindungswelle (16) und das Koppelgetriebesonnenrad (19) mit der ersten Verbindungswelle (15) unmittelbar wirkverbunden ist.

6. Getriebeeinrichtung nach einem der vorhergehenden Ansprüche, **dadurch gekennzeichnet, dass** der Koppelgetriebeplanetenträger (20) zumindest ein als Außenplanetenrad ausgebildetes Koppelgetriebeplanetenrad (21) und zumindest ein Innenplanetenrad (22) aufweist, die miteinander kämmen, wobei das Außenplanetenrad (21) mit dem Koppelgetriebehohlrad (23) und das Innenplanetenrad (22) mit dem Koppelgetriebesonnenrad (19) kämmt.

7. Getriebeeinrichtung nach einem der vorhergehenden Ansprüche, **dadurch gekennzeichnet, dass** das erste Überlagerungsgetriebe (7) ein erstes Überlagerungsgetriebesonnenrad (24), ein erstes Überlagerungsgetriebehohlrad (25) und einen ersten Überlagerungsgetriebeplanetenträger (26) mit wenigstens einem mit dem ersten Überlagerungsgetriebesonnenrad (24) und dem ersten Überlagerungsgetriebehohlrad (25) kämmenden ersten Überlagerungsgetriebeplanetenrad (27) aufweist, wobei das erste Überlagerungsgetriebehohlrad (25) über die erste Kupplung (32) unmittelbar mit der Abtriebswelle (12) wirkverbindbar ist.

8. Getriebeeinrichtung nach einem der vorhergehenden Ansprüche, **dadurch gekennzeichnet, dass** das zweite Überlagerungsgetriebe (8) ein zweites Überlagerungsgetriebesonnenrad (28), ein zweites Überlagerungsgetriebehohlrad (29) und einen zweiten Überlagerungsgetriebeplanetenträger (30) mit wenigstens einem mit dem zweiten Überlagerungsgetriebesonnenrad (28) und dem zweiten Überlagerungsgetriebehohlrad (29) kämmenden zweiten Überlagerungsgetriebeplanetenrad (31) aufweist, wobei der zweite Überlagerungsgetriebeplanetenträger (30) über die zweite Kupplung (33) unmittelbar mit der Abtriebswelle (12) wirkverbindbar ist.

9. Getriebeeinrichtung nach einem der vorhergehenden Ansprüche, **dadurch gekennzeichnet, dass** das zweite Überlagerungsgetriebesonnenrad (28), insbesondere über den ersten Überlagerungsgetriebeplanetenträger (26), und/oder der erste Überlagerungsgetriebeplanetenträger (26) mit der Antriebswelle (9) und dem Koppelgetriebehohlrad (23) unmittelbar wirkverbunden sind/ist.

10. Getriebeeinrichtung nach einem der vorhergehenden Ansprüche, **dadurch gekennzeichnet, dass** das erste Überlagerungsgetriebesonnenrad (24) und das zweite Überlagerungsgetriebehohlrad (29) unmittelbar mit der ersten Verbindungswelle (15) oder der zweiten Verbindungswelle (16) wirkverbunden sind.

## Claims

1. Gearbox unit (1) for a motor vehicle, wherein the motor vehicle has a first wheel axle (2) and a second wheel axle (3), the second wheel axle (2) being composed of at least one first sub-axle (4) and one second sub-axle (5), wherein a first connecting shaft (15) which is operatively connectible to the first sub-axle (4), a second connecting shaft (16) which is operatively connectible to the second sub-axle (5), and a coupling gearbox (6) which has a drive input shaft (9) operatively connectible to a drive assembly (10) of the motor vehicle and a drive output shaft (12) operatively connectible to the first wheel axle (2) are present, wherein, by way of said coupling gearbox (6), the drive input shaft (9) is operatively connected in a torque-splitting fashion to the first connecting shaft (15) and to the second connecting shaft (16), and wherein the drive output shaft (12) is operatively connectible, by means of a first coupling (32) and a second coupling (33), to the drive input shaft (9) such that each can shift separately, wherein a first overlay gearing (7) is provided in the operative connection between the first coupling (32) and the drive input shaft (9), and a second overlay gearing (8) is provided in the operative connection between the second coupling (33) and the drive input shaft (9), **characterised in that** an operative connection established by way of the overlay gearings (7,8) between the drive output shaft (12) and the drive input shaft (9) is not present by way of the coupling gearbox (6).

2. Gearbox unit according to claim 1, **characterised in that** the first overlay gearing (7) and the second overlay gearing (8) are configured as planetary gears, which are respectively operatively connected directly to the coupling gearbox (6).

3. Gearbox unit according to any one of the preceding claims, **characterised in that** the drive output shaft (12) is operatively connectible to the first overlay gearing (7) by way of the first coupling (32) and to the second overlay gearing (8) by way of the second coupling (33).

4. Gearbox unit according to any one of the preceding claims, **characterised in that** the coupling gearbox (6) has a coupling-gearbox sun wheel (19), a coupling-gearbox internally-toothed ring (23) and a coupling-gearbox planet carrier (20) with at least one coupling-gearbox planet wheel (21) meshing with the coupling-gearbox sun wheel (19) and the coupling-gearbox internally-toothed ring (23), wherein the coupling-gearbox internally-toothed ring (23) is operatively connected directly to the drive input shaft (9).

5. Gearbox unit according to any one of the preceding claims, **characterised in that** the coupling-gearbox planet carrier (20) is operatively connected directly to the second connecting shaft (16) and the coupling-gearbox sun wheel (19) is operatively connected directly to the first connecting shaft (15).

6. Gearbox unit according to any one of the preceding claims, **characterised in that** the coupling-gearbox planet carrier (20) has at least one coupling-gearbox planet wheel (21), configured as external planet wheel, and at least one internal planet wheel (22) that intermesh, wherein the external planet wheel (21) meshes with the coupling-gearbox internally-toothed ring (23) and the internal planet wheel (22) meshes with the coupling-gearbox sun wheel (19).

7. Gearbox unit according to any one of the preceding claims, **characterised in that** the first overlay gearing (7) has a first overlay-gearing sun wheel (24), a first overlay-gearing internally-toothed ring (25) and a first overlay-gearing planet carrier (26) with at least one first overlay-gearing planet wheel (27) meshing with the first overlay-gearing sun wheel (24) and the first overlay-gearing internally-toothed ring (25), wherein the first overlay-gearing internally-toothed ring (25) is operatively connectible directly to the drive output shaft (12) by way of the first coupling (32).

8. Gearbox unit according to any one of the preceding claims, **characterised in that** the second overlay gearing (8) has a second overlay-gearing sun wheel (28), a second overlay-gearing internally-toothed ring (29) and a second overlay-gearing planet carrier (30) with at least one second overlay-gearing planet wheel (31) meshing with the second overlay-gearing sun wheel (28) and the second overlay-gearing internally-toothed ring (29), wherein the second overlay-gearing planet carrier (30) is operatively connectible directly to the drive output shaft (12) by way of the second coupling (33).

9. Gearbox unit according to any one of the preceding claims, **characterised in that** the second overlay-gearing sun wheel (28) - in particular by way of the first overlay-gearing planet carrier (26) - and/or the first overlay-gearing planet carrier (26) are/is operatively connected directly to the drive input shaft (9) and the coupling-gearbox internally-toothed ring (23).

10. Gearbox unit according to any one of the preceding claims, **characterised in that** the first overlay-gearing sun wheel (24) and the second overlay-gearing internally-toothed ring (29) are operatively connected directly to the first connecting shaft (15) or the second connecting shaft (16).

## Revendications

1. Dispositif de transmission (1) pour un véhicule automobile, dans lequel le véhicule automobile présente un premier essieu (2) et un second essieu (3), dans lequel le second essieu (2) est constitué d'au moins un premier essieu partiel (4) et un second essieu partiel (5), dans lequel sont présents un premier arbre de liaison (15) pouvant être relié en liaison active avec le premier essieu partiel (4), un second arbre de liaison (16) pouvant être relié en liaison active avec le second essieu partiel (5) ainsi qu'un engrenage couplé (6) avec un arbre d'entraînement (9), pouvant être relié en liaison active avec un groupe d'entraînement (10) du véhicule automobile, et avec un arbre de sortie (12), pouvant être relié en liaison active avec le premier essieu (2), dans lequel l'arbre d'entraînement (9) est en liaison active avec le premier arbre de liaison (15) et avec le second arbre de liaison (16) par l'intermédiaire de l'engrenage couplé (6) de manière à diviser le couple, dans lequel l'arbre de sortie (12) peut être relié en liaison active avec l'arbre d'entraînement (9) au moyen d'une première liaison (32) et au moyen d'une second liaison (33), à chaque fois de manière commutable séparément, dans lequel il est prévu dans la liaison active entre la première liaison (32) et l'arbre d'entraînement (9) un premier engrenage à superposition (7) et dans la liaison active entre la second liaison (33) et l'arbre d'entraînement (9) un second engrenage à superposition (8),
**caractérisé en ce qu'**il n'existe pas de liaison active, établie par l'intermédiaire des engrenages à superposition (7, 8) entre l'arbre de sortie (12) et l'arbre d'entraînement (9), par l'intermédiaire de l'engrenage couplé (6).

2. Dispositif de transmission selon la revendication 1, **caractérisé en ce que** le premier engrenage à superposition (7) et le second engrenage à superposition (8) sont réalisés comme des engrenages planétaires qui sont en liaison active, à chaque fois directement, avec l'engrenage couplé (6).

3. Dispositif de transmission selon l'une quelconque des revendications précédentes, **caractérisé en ce que** l'arbre de sortie (12) peut être relié en liaison active avec le premier engrenage à superposition (7) par l'intermédiaire de la première liaison (32) et avec le second engrenage à superposition (8) par l'intermédiaire de la seconde liaison (33).

4. Dispositif de transmission selon l'une quelconque des revendications précédentes, **caractérisé en ce que** l'engrenage couplé (6) présente une roue solaire d'engrenage couplé (19), une couronne d'engrenage couplé (23) et une cage de train planétaire d'engrenage couplé (20) avec au moins une roue planétaire d'engrenage couplé (21) s'engrenant avec la roue solaire d'engrenage couplé (19) et avec la couronne d'engrenage couplé (23), dans lequel la couronne d'engrenage couplé (23) est en liaison active directe avec l'arbre d'entraînement (9).

5. Dispositif de transmission selon l'une quelconque des revendications précédentes, **caractérisé en ce que** la cage de train planétaire d'engrenage couplé (20) est en liaison active directe avec le second arbre de liaison (16) et la roue solaire d'engrenage couplé (19) est en liaison active directe avec le premier arbre de liaison (15).

6. Dispositif de transmission selon l'une quelconque des revendications précédentes, **caractérisé en ce que** la cage de train planétaire d'engrenage couplé (20) présente au moins une roue planétaire d'engrenage couplé (21) réalisée comme une roue planétaire extérieure et au moins une roue planétaire intérieure (22) qui s'engrènent l'une avec l'autre, dans lequel la roue planétaire extérieure (21) s'engrène avec la couronne d'engrenage couplé (23) et la roue planétaire intérieure (22) s'engrène avec la roue solaire d'engrenage couplé (19).

7. Dispositif de transmission selon l'une quelconque des revendications précédentes, **caractérisé en ce que** le premier engrenage à superposition (7) présente une première roue solaire d'engrenage à superposition (24), une première couronne d'engrenage à superposition (25) et une première cage de train planétaire d'engrenage à superposition (26) avec au moins une première roue planétaire d'engrenage à superposition (27) s'engrenant avec la première roue solaire d'engrenage à superposition (24) et avec la première couronne d'engrenage à superposition (25), dans lequel la première couronne d'engrenage à superposition (25) peut être reliée en liaison active directement avec l'arbre de sortie (12) par l'intermédiaire de la première liaison (32).

8. Dispositif de transmission selon l'une quelconque des revendications précédentes, **caractérisé en ce que** le second engrenage à superposition (8) présente une seconde roue solaire d'engrenage à superposition (28), une seconde couronne d'engrenage à superposition (29) et une seconde cage de train planétaire d'engrenage à superposition (30) avec au moins une seconde roue planétaire d'engrenage à superposition (31) s'engrenant avec la seconde roue solaire d'engrenage à superposition (28) et avec la seconde couronne d'engrenage à superposition (29), dans lequel la seconde cage de train planétaire d'engrenage à superposition (30) peut être reliée en liaison active directement avec l'arbre de sortie (12) par l'intermédiaire de la seconde liaison (33).

9. Dispositif de transmission selon l'une quelconque des revendications précédentes, **caractérisé en ce que** la second roue solaire d'engrenage à superposition (28), en particulier par l'intermédiaire de la première cage de train planétaire d'engrenage à superposition (26), et/ou la première cage de train planétaire d'engrenage à superposition (26) est/sont en liaison active directe avec l'arbre d'entraînement (9) et avec la couronne d'engrenage couplé (23).

10. Dispositif de transmission selon l'une quelconque des revendications précédentes, **caractérisé en ce que** la première roue solaire d'engrenage à superposition (24) et la seconde couronne d'engrenage à superposition (29) sont en liaison active directe avec le premier arbre de liaison (15) ou avec le second arbre de liaison (16).
